# EUROPÄISCHE PATENTSCHRIFT

(11) **EP 0 521 406 B1**
(45) Veröffentlichungstag und Bekanntmachung des Hinweises auf die Patenterteilung: **04.01.1995**
(21) Anmeldenummer: 92110816.3
(22) Anmeldetag: 26.06.1992
(51) Int. Cl.: B01D 17/032, B01D 21/24

(54) **Abscheider zum Abtrennen von Schwimm- und Sinkstoffe aus mit diesen Stoffen verschmutzten Abwässern**
Device for the separation of floating and settling matters from waste water contaminated with these matters
Dispositif pour la séparation de matières flottantes et sédimentantes à partir d'eaux usées contaminées par ces matières

(30) Priorität: 28.06.1991 DE 4121332
(43) Veröffentlichungstag der Anmeldung: 07.01.1993
(73) Patentinhaber: PASSAVANT-WERKE AG, 65322 Aarbergen 7 (DE)
(72) Erfinder: Weiler, Walter, Dipl.-Ing., W-6252 Diez (DE); Diefenbach, Günter, W-6255 Dornburg 1 (DE); Helffenstein, Kurt, D-65558 Flacht (DE)
(74) Vertreter: Glawe, Delfs, Moll & Partner

(56) Entgegenhaltungen:
- CH-A- 492 466
- DE-A- 3 820 142
- DE-U- 9 104 255
- US-A- 3 430 768

## Beschreibung

Die Erfindung betrifft einen nach dem Schwerkraftprinzip arbeitenden Abscheider zum Abtrennen von Schwimm- und Sinkstoffen aus mit diesen Stoffen verschmutzten Abwässern.

Aus der DE-A-41 05 567 ist ein Abscheider bekannt, dessen geschlossenes Abscheidegehäuse in der Decke eine obere Abzugsöffnung mit Absperrorgan zum Abzug der aufgeschwommenen Schwimmstoffe und im Boden eine untere Abzugsöffnung mit Absperrorgan zum Abzug der sedimentierten Sinkstoffe aufweist. Abwasserzulaufleitung und Reinwasser-Ablaufleitung sind so hoch über die obere Abzugsöffnung gezogen, daß sich im Abscheidebehälter kein Freispiegel einstellen kann. Die Schwimmstoffe stehen vielmehr unmittelbar luftfrei an der Abzugsöffnung an und können durch Öffnen des Absperrorgans und durch Zufuhr von Druckwasser aus einer Druckwassereinrichtung ausgetragen werden. Die in der Abwasserzulaufleitung und der Reinwasserablaufleitung vorgesehenen Absperrorgane werden hierbei ebenso wie beim Abzug der Sinkstoffe geschlossen.

Es hat sich gezeigt, daß neben dem Austrag der Schwimmstoffe auch noch andere Tätigkeiten am Abscheider durchgeführt werden müssen. So ist es von Zeit zu Zeit erforderlich, das Abscheidegehäuse nach dem Abziehen der Sinkstoffe ganz zu entleeren und ggf. zu reinigen, um Rückstände zu beseitigen, die eine anaerobe Umsetzung der abgeschiedenen Stoffe herbeiführen können. Auch kann es sinnvoll sein, den Abscheiderinhalt nach dem Abzug der Schwimmstoffe wenigstens teilweise abzulassen, um die im Abscheider zum Eindicken der aufgerahmten Schwimmstoffe ggf. vorhandenen Krähleinrichtungen kontrollieren zu können. Eine Teilentleerung ist auch dann sinnvoll, wenn nach dem Entsorgen der Schwimmstoffe die wässrige Phase abgelassen und dann erst die Sinkstoffcharge ausgetragen wird.

Die Aufgabe, diese Vorgänge mit möglichst geringem Aufwand durchführen zu können, wird gemäß der Erfindung dadurch gelöst, daß die Druckwassereinrichtung als Pumpe ausgebildet ist, die saugseitig über voneinander unabhängige Absperrorgane sowohl an die Abwasserzulaufleitung als auch an die mittlere Höhe des Abscheidebehälters als auch an die Sinkstoff-Abzugsöffnung angeschlossen ist, daß die Saugleitung zum Abwasserzulauf stromauf zu einem dort vorgesehenen Absperrorgan angeschlossen ist, und daß die Pumpe druckseitig über voneinander unabhängige Absperrorgane sowohl an den stromab zum Absperrorgan liegenden Abschnitt des Abwasserzulaufs als auch an den stromauf zum Absperrorgan liegenden Abschnitt des Reinwasserablaufs angeschlossen ist. Auf diese Weise kann das Abscheidegehäuse nach dem Austrag der Sinkstoffe ganz entleert und ausgespült werden. Es ist sinnvoll, den Ablauf so umzusteuern, daß der Spülschlamm entweder entsorgt oder in einen Schlammfang geleitet wird. Mit der von der Mitte des Abscheidergehäuses abgehenden Saugleitung kann eine Teilentleerung vor allem der wässrigen Phase des Abscheiders vorgenommen werden. Die saubere wässrige Phase kann in den Kanal abgeleitet werden.

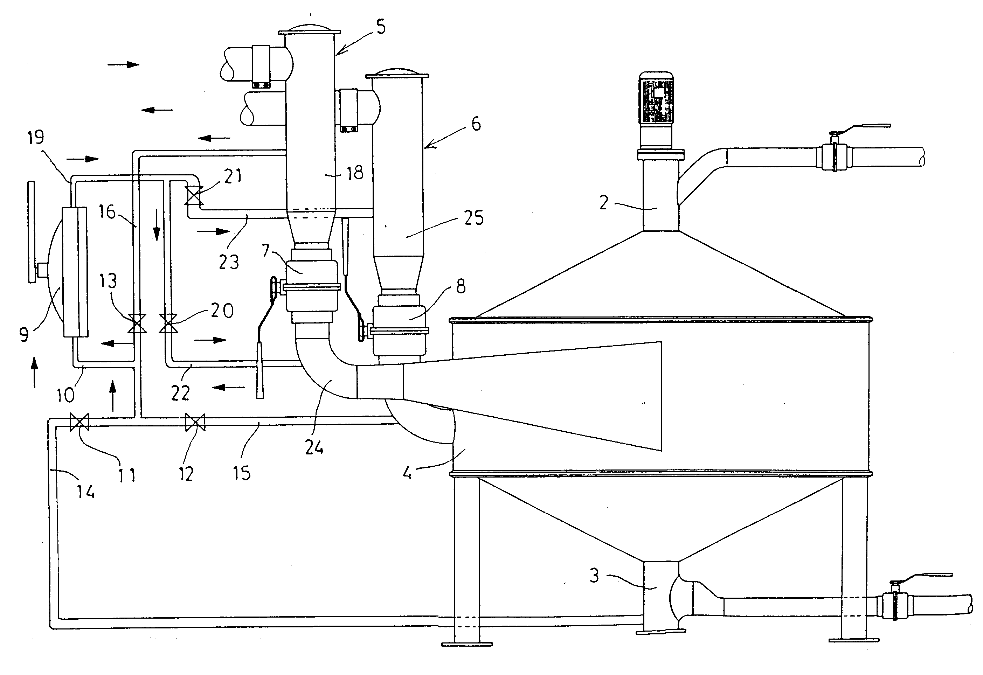

Ein Ausführungsbeispiel für eine solche Mehrzweck-Einrichtung ist in der Figur gezeigt; die Pfeile geben die Fließrichtung der Stoffe in den Leitungen an.

Das als geschlossener Behälter 1 mit oberer Schwimmstoff-Abzugsöffnung 2 und unterer Sinkstoff-Austragöffnung 3 ausgebildete Abscheidegehäuse 4 besitzt eine überhöhte Abwasser-Zulaufleitung 5 und eine ebensolche Reinwasser-Ablaufleitung 6. Beide sind mit handbetätigten Absperrorganen 7, 8 im unteren Bereich versehen.

Eine hier als Handpumpe ausgebildete Pumpe 9 ist mit ihrer Ansaugleitung 10 über Absperrorgane 11, 12, 13 und Zweigleitungen 14, 15, 16 mit dem Sinkstoffaustrag 3, dem unteren Abschnitt 17 der Reinwasser-Ablaufleitung 6 und dem oberen Abschnitt 18 der Abwasser-Zulaufleitung 5 verbunden. Die Druckseite 19 der Handpumpe 9 verzweigt sich über absperrbare (20, 21) Zweigleitungen 22, 23 zu dem unteren Abschnitt 24 der Abwasser-Zulaufleitung 5 und dem oberen Abschnitt 25 der Reinwasser-Ablaufleitung 6.

Für die einzelnen Funktionen müssen folgende Handhabungen vorgenommen werden:
Schwimmstoffaustrag: die Absperrorgane 7, 8, 11, 12 und 21 sind geschlossen, die Absperrorgane 13 und 20 geöffnet. Durch Betätigen der Handpumpe wird Druckwasser aus dem oberen Abschnitt 18 der Abwasser-Zulaufleitung 5 entnommen und über die Zweigleitung 22 in den unteren Abschnitt 24 der Abwasser-Zulaufleitung 5 und damit in das Abscheidegehäuse 4 gepumpt, wodurch die Schwimmstoffe nach oben herausgedrückt werden.
Teilentleerung: die Absperrorgane 7, 8, 11, 13 und 20 sind geschlossen, die Absperrorgane 12 und 21 geöffnet. Durch die Saugleitung 15 wird die Wasserphase aus dem Abscheidegehäuse abgesaugt und durch die Zweigleitung 23 in den oberen Abschnitt 25 der Reinwasser-Ablaufleitung 6 gehoben.
Totalentleerung: die Absperrorgane 7, 8, 12, 13 und 20 sind geschlossen, die Absperrorgane 11 und 21 geöffnet. Die Pumpe entnimmt Schlamm über die Zweigleitung 14 aus der Sinkstoff-Austragöffnung 3 und fördert ihn genau wie bei der Teilentleerung in den oberen Abschnitt 25 des Reinwasser-Ablaufschachts 6 in den Auslauf.

## Patentansprüche

1. Abscheider zum Abtrennen von Schwimm- und Sinkstoffen mittels Schwerkraft aus mit diesen Stoffen verunreinigten Abwässern, mit einem von einem seitlichen Zulauf (5) zu einem gegenüberliegenden Reinwasser-Ablauf (6) im wesentlichen horizontal durchströmten, geschlossenen Abscheidebehälter (4), mit einer in der Decke des Abscheidebehälters (4) vorgesehenen, mit einem Absperrorgan versehenen Abzugsöffnung (2) für die Schwimmstoffe und einer im Boden vorgesehenen mit einem Absperrorgan versehenen Abzugsöffnung (3) für die Sinkstoffe, wobei die Abwasserzulaufleitung (5) und die Reinwasserablaufleitung (6) so hoch über die obere Schwimmstoff-Abzugsöffnung (2) gezogen sind, daß der Abscheidebehälter ohne Freispiegel betrieben wird, wobei die Reinwasser-Ablaufleitung (6) ein Verschlußorgan (8) aufweist und der Abscheidebehälter (4) mit einem Anschluß für eine Druckwassereinrichtung und einer Druckwassereinrichtung (9) ausgestattet ist, **dadurch gekennzeichnet**, daß die Druckwassereinrichtung als Pumpe (9) ausgebildet ist, die saugseitig über voneinander unabhängige Absperrorgane (11, 12, 13) sowohl an die Abwasserzulaufleitung (5) als auch an die mittlere Höhe des Abscheidebehälters (4) als auch an die Sinkstoff-Abzugöffnung (3) angeschlossen ist, daß die Saugleitung (16) zum Abwasserzulauf (5) stromauf zu einem dort vorgesehenen Absperrorgan (7) angeschlossen ist, und daß die Pumpe (9) druckseitig über voneinander unabhängige Absperrorgane (20, 21) sowohl an den stromab zum Absperrorgan (7) liegenden Abschnitt (24) des Abwasserzulaufs (5) als auch an den stromab zum Absperrorgan (8) liegenden Abschnitt (25) des Reinwasserablaufs (6) angeschlossen ist.

2. Abscheider nach Anspruch 1, **dadurch gekennzeichnet**, daß die Saugleitungen (14, 15) aus der Sinkstoff-Abzugsöffnung (3) und der mittleren Höhe des Abscheidebehälters (4) vor der Pumpe (9) zusammengefaßt sind (10).

## Claims

1. Gravity separator for separation of suspended and settleable solids from waste water which is contaminated with these substances, comprising a closed vessel (4) with a mostly horizontal water flow from the lateral inlet (5) to the clear water effluent (6) on the opposite side, provided with a drain opening (2) with a shut-off device in the vessel ceiling for withdrawal of scum and a drain opening (3) with a shut-off device in the vessel bottom for withdrawal of settled solids, where the sewage water feed pipe (5) and the clear water discharge pipe (6) are reaching as far above the scum withdrawal opening (2) that the separator can be operated by hydraulic pressure, and with the clear water discharge pipe (6) being equipped with a shut-off device and the separator vessel (4) with a hydraulic plant including the corresponding connection, **characterized in that** the hydraulic plant is a pump (9) which is connected at its intake side, via independent shut-off devices (11, 12, 13), to the waste water feed pipe (5), the separator vessel (4), at medium height, and to the drainage opening for settled solids as well, that the suction pie (16) to the waste water feed pipe (5) is connected to a shut-off device (7) provided upstream for that purpose and that the pump (9) is connected with its delivery side, via independent shut-off devices (20, 21), to the section (24) of the waste water feed pipe (5) located downstream of the shut-off device (7) and to the section (25) of the clear water discharge pipe (6) located downstream of the shut-off device (8).

2. Separator according to claim 1, **characterized in that** the suction pipes (14, 15) from the drain opening for settled solids (3) and from the connection at medium height of the separator vessel (4) are joint (10) in front of the pump (9).

## Revendications

1. Séparateur à gravité pour les matières suspendues et sédimentées dans les eaux usées étant contaminées par ces substances, constitué par un récipient clos (4) présentant généralement un courant horizontal de la conduite d'arrivée latérale (5) à la décharge de l'eau clarifiée (6) au côté opposé, ayant un plafond avec une bouche d'évacuation (2) pour les matières surnageantes muni d'un organe d'arrêt et une bouche d'évacuation pour les matières sédimentées (3) muni d'un organe d'arrêt prévue dans le fond du récipient (4), la conduite d'arrivée des eaux usées (5) et la conduite de décharge de l'eau clarifiée montant en dessus de la bouche d' évacuation pour les matières surnageantes (2) de manière que le séparateur peut être opéré à pression hydraulique, la conduite de décharge de l'eau clarifiée (6) étant munie d'un organe d'arrêt (8) et le récipient (4) étant équipé d'un dispositif hydraulique et le raccord correspondant, **caractérisé en ce que** le dispositif hydraulique est une pompe (9) laquelle est reliée, par l'intermédiaire d'organes d'arrêt indépendants, au côté aspiration soit à la conduite d'arrivée des eaux usées (5), soit à hauteur moyenne au récipient séparateur (4), soit à la bouche d'évacuation pour les matières sédimentées (3) et que la conduite aspirante (16) est reliée en amont à un organe d'arrêt (7) prévu à cet effet dans la conduite d'arrivée des eaux usées (5) et que le côté de refoulement de la pompe (9) est raccordé par l'intermédiaire des organes d'arrêt indépendants (20, 21) soit à la section (24) de la conduite d'arrivée des eaux usées (5) située en aval de l'organe d'arrêt (7), soit à la section (25) de la décharge de l'eau clarifiée (6) située en aval de l'organe d'arrêt (8).

2. Séparateur selon revendication 1, **caractérisé en ce que** les conduites aspirantes (14, 15) sortant de la bouche d'évacuation pour les matières sédimentées (3) et à hauteur moyenne du récipient séparateur (4) sont jointes (10) devant la pompe (9).
